# EUROPÄISCHE PATENTSCHRIFT

(11) **EP 0 727 291 B1**
(45) Veröffentlichungstag und Bekanntmachung des Hinweises auf die Patenterteilung: **29.03.2000**
(21) Anmeldenummer: 95120751.3
(22) Anmeldetag: 30.12.1995
(51) Int. Cl.: B27G 13/04, B23Q 16/00

(54) **Justierplatte für Hobelmesser**
Rotary cutter blade adjusting apparatus
Dispositif de réglage pour couteaux de rabot

(30) Priorität: 23.01.1995 DE 29500996 U
(43) Veröffentlichungstag der Anmeldung: 21.08.1996
(60) Teilanmeldung: 99103431.5
(73) Patentinhaber: ROBERT BOSCH GMBH, 70442 Stuttgart (DE)
(72) Erfinder: Hild, Eugen, D-72631 Aichtal (DE); Zaiser, Adolf, D-73257 Köngen (DE)

(56) Entgegenhaltungen:
- FR-A- 574 536
- US-A- 3 600 816

## Beschreibung

### Stand der Technik

Die Erfindung geht aus von einer Justierplatte nach der Gattung des Anspruchs 1.

Es sind bereits Justierplatten für Hobelmesser bekannt, die als Einstellehre zum Justieren der Hobelmesserschneide gegenüber einer rückwärtigen Bezugsfläche dienen. Das Justieren der Hobelmesserschneide ist notwendig, weil sich nach einem Scharfschleifen der Hobelmesserschneiden durch einen Werkstoffabtrag von einigen Zehntel Millimetern die Schneide verschiebt. Diese Verlagerung der Schneide führt zu einer Minderung der Qualität der Hobelarbeit, weil der Flugkreis und damit der Werkzeugeingriff gegenüber dem Werkstück verändert wird. Damit dies einfach ausgleichbar ist, tragen einige Hobelmesser an ihrem Rücken eine winkelprofilartige Leiste, die als Justierkörper dient. Der Justierkörper ist mittels Justierschrauben auf die Flachseite des Hobelmessers geschraubt. Diese greifen durch Langlöcher des Justierkörpers in Gewindebohrungen der Hobelmesser ein. Der eine Schenkel des Winkelprofils legt sich dabei parallel an die Flachseite des Hobelmessers wobei der andere Schenkel rechtwinklig zur Flachseite bzw. parallel zum Messerrücken verläuft und über die untere Flachseite des Hobelmessers hinausragt.

Der abgebogene Schenkel ist zum Eingriff in eine Haltenut einer Hobelwelle vorgesehen.

Der Justierkörper ist gegenüber dem Hobelmesser mittels der Justierschrauben mit Langlöchern verschiebbar befestigt. Auf diese Weise kann die Schneidenlage gegenüber dem abgebogenen Lappen verändert bzw. neu eingestellt werden.

Bei der bekannten Justierplatte wird die Stirnseite eines Quaders durch den abgebogenen Schenkel des Justierkörpers hintergriffen, während die untere Flachseite des Hobelmessers auf der Oberseite anliegt und wobei eine stufenartige auf die Oberseite befestigte Leiste als Anschlag für die Schneide dient. Der Abstand der stufenartigen Leiste bezüglich der vom abgerbogenen Schenkel hintergriffenen Stirnseite genau eingestellt.

Nach dem Scharfschleifen des Hobelmesses, insbesondere nach Beschädigung der Schneide durch Auftreffen auf einen Nagel oder andere metalische Teile, ist der Abstand der Schneide gegenüber dem abgebogenen Schenkel des Justierkörpers deutlich um den Betrag des Werkstoffabtrags beim Schleifen vermindert. Durch Auflegen des Hobelmessers auf die Justierplatte und in Anschlagbringen des Justierkörpers an die Stirnseite der Justierplatte wird zunächst die Lage des Justierkörpers festgelegt.

Nach dem Lösen der Justierschrauben kann das Hobelmesser gegenüber dem Justierkörper verschoben werden in Richtung der Anschlagleiste. Werden nun die Justierschrauben wieder festgeschraubt, ist die ursprüngliche Justierlage der Schneiden gegenüber dem abgebogenen Schenkel des Justierkörpers wieder hergestellt und demzufolge auch die Lage der Hobelmesserschneide auf einer entsprechenden Hobelwelle.

Durch die US-A-3 600 816 ist eine Justiervorrichtung zum Justieren der Schneidenposition des Hobelmessers bekannt. Dabei wird das Hobelmesser gegenüber der Hobelwelle bzw. gegenüber mit dem Hobelmesser verbundenen Justierkörpern verstellt. Die Justiervorrichtung besteht aus einer Vielzahl von Einzelteilen und ist kompliziert aufgebaut. Das Justieren ist, insbesondere nach dem Schärfen des Hobelmessers, umständlich und zeitraubend, wobei das Hobelmesser dabei nicht gegen Verlieren gesichert ist.

Die bekannte Justierplatte hat den Nachteil, daß während des Justiervorganges das Hobelmesser mit dem Justierkörper gegenüber der Justierplatte nicht lagegesichert ist. Der Bedienende ist gezwungen, ständig den Justierkörper in Anschlaganlage zur Stirnseite der Justierplatte zu halten. Dies erschwert das Justieren der Hobelmesserschneide beträchtlich.

### Vorteile der Erfindung

Die erfindungsgemäße Justierplatte mit den kennzeichnenden Merkmalen des Anspruchs 1 hat demgegenüber den Vorteil, daß die Hobelmesserschneide schnell und einfach justierbar ist und der Bedienende beide Hände frei hat für das genaue Einstellen der Hobelmesserschneide gegenüber dem Anschlag.

Außerdem besitzt die erfindungsgemäße Justierplatte eine Werkzeugaufnahme für einen Winkelschraubendreher zum Festschrauben der Justierschrauben am Hobelmesser.

Weitere, vorteilhafte Ausgestaltungen der Erfindung ergeben sich aus den abhängigen Ansprüchen.

### Zeichnung

Ein Ausführungsbeispiel der Erfindung ist in der nachfolgenden Beschreibung anhand der zugehörigen Zeichnungen näher erläutert.

Es zeigen Figur 1 eine bekannte Hobelwelle mit einem Hobelmesser mit Justierkörper, Figur 2 eine Explosionsdarstellung eines Hobelmessers mit Justierkörper und Justierschrauben, Figur 3 ein Ausführungsbeispiel einer Justierplatte mit aufgelegtem Hobelmesser und Schraubwerkzeug, Figur 4 einen seitlichen Schnitt 'durch die Justierplatte im Bereich einer Justierschraube, Figur 5 eine räumliche Darstellung der Justierplatte und Figur 6 eine Draufsicht auf die Justierplatte mit gehaltertem Justierwerkzeug.

### Beschreibung der Ausführungsbeispiele

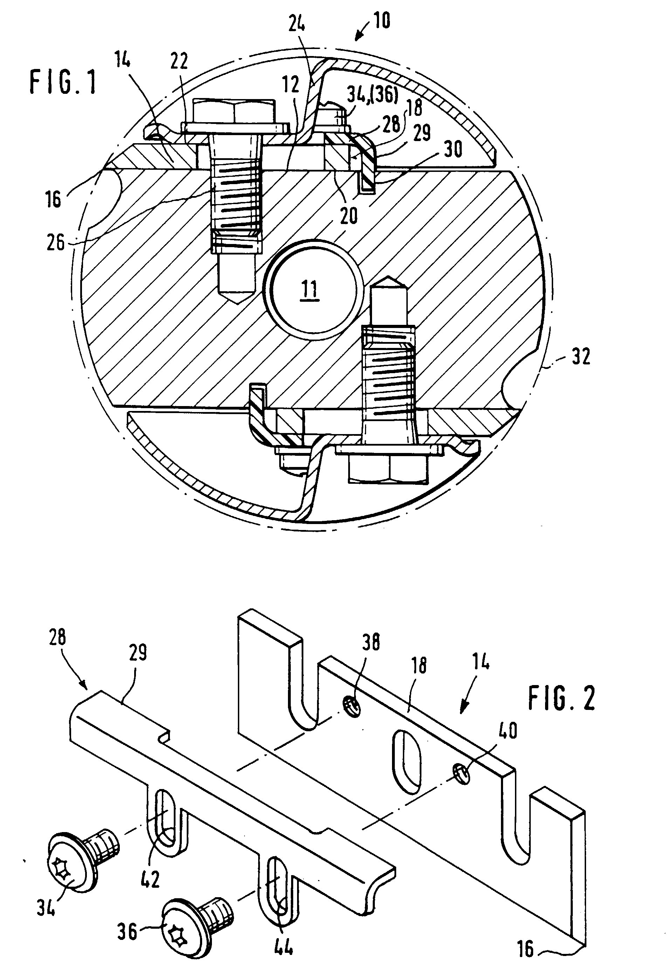

In Figur 1 zeigt zum besseren Verständnis der eigentlichen Erfindung, die gemäß den nachfolgenden Figuren erläutert wird, eine Schnittdarstellung einer Hobelwelle 10 mit einer Achse 11. Diese trägt spiegelbildlich einander gegenüber angeordnet zwei Abplattungen 12, von denen nur die der einen Seite näher bezeichnet ist. Die Abplattung 12 trägt ein Hobelmesser 14 mit einer Schneide 16 und mit einem Messerrücken 18, der sich auf der der Schneide 16 entgegengesetzten Schmalseite befindet. Mit einer unteren Flachseite 20 liegt das Hobelmesser 14 bündig auf der Abplattung 12 auf. Gegen die obere Flachseite 22 stützt sich eine Spannbacke 24, die mittels einer Klemmschraube 26 an der Hobelwelle 10 befestigt ist und das Hobelmesser 14 festspannt.

Das Hobelmesser 14 trägt auf seiner oberen Flachseite 22 im Bereich des Messerrückens 18 einen als L-Profilleiste ausgestalteten Justierkörper 28 aus Kunststoff, der mit seinem rechtwinklig zur unteren Flachseite 20 bzw. parallel zum Messerrücken 18 gebogenen Schenkel 29 in eine Nut 30 in der Abplattung 12 eingreift. Durch diese parallel zur Achse 11 angeordnete Nut 30 wird die Lage der Schneide 16 gegenüber dem Justierkörper 28 wiederholbar festgelegt. Die Position der Schneide 16 ist durch das Soll-Maß des Flugkreises 32 bestimmt.

Justierschrauben 34, 36, von denen hier nur die erste sichtbar ist, greifen in Gewindebohrungen 38, 40 des Hobelmessers 14 und halten daran den Justierkörper 28 fest.

In Figur 2 zeigt eine räumliche Darstellung des Hobelmessers 14 die Schneide 16, den Rücken 18, die Gewindebohrungen 38, 40 und den Justierkörper 28 mit dem Schenkel 29. Die Justierschrauben 34, 36 durchtreten die Langlöcher 42, 44 des Justierkörpers 28 und greifen in die Gewindebohrungen 38, 40 ein. Somit halten sie den Justierkörper 28 gegenüber dem Hobelmesser 14 justierbar fest.

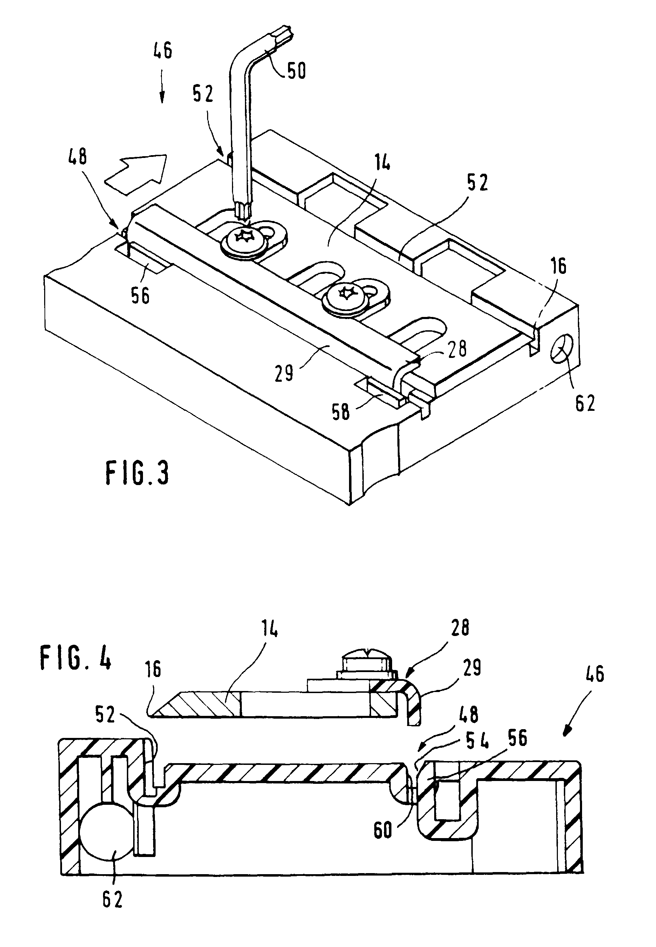

In Figur 3 ist die räumliche Darstellung einer Justierplatte 46 gezeigt, auf der das Hobelmesser 14 mit dem Justierkörper 28 justierbereit befestigt ist. Der Justierkörper 28 greift mit seinem abgebogenen Schenkel 29 in eine Nut 48 der Justierplatte 46 und wird darin durch die angeformten Federzungen bzw. Blattfedern 56, 58 festgehalten.

Die Nut 48 hat die gleiche Aufgabe, wie die Nut 30 in der Abplattung 12 der Hobelwelle 10 gemäß Figur 1.

Mit einem Schraubendreher 50 werden die Justierschrauben 34, 36 gelöst. Dann wird das Hobelmesser 14 in Pfeilrichtung soweit verschoben, bis die Schneide 16 an die stirnseitige Stufe 52 der Justierplatte 46 anschlägt. Anschließend werden die Justierschrauben 34, 36 wieder festgedreht.

An der Seite der Justierplatte 46 ist eine Öffnung 62 zum Deponieren des Schraubendrehers 50 angeordnet.

In Figur 4 ist ein Querschnitt durch die Justierplatte 46 gezeigt, wobei die Stufe 52 als Anschlag für die Schneide 16 des Hobelmessers 14 deutlich sichtbar ist. Außerdem sind der Justierkörper 28 mit seinem abgebogenen Schenkel 29 sowie die Nut 48 und die Öffnung 62 der Justierplatte 46 sichtbar.

Die rückwärtige Nutseitenwand 54 wird durch die Blattfedern 56, 58 ergänzt, von denen hier nur die eine Blattfeder 56 sichtbar 'ist, die den Schenkel 29 nach dem Einsetzen in die Nut 48 gegen die vordere Nutseitenwand 60 entsprechend dem Richtungspfeil 59 pressen und so in definierter Lage festhalten. Dadurch wird das Einstellen des Hobelmessers 14 gegenüber dem Justierkpörper 28 und das Festdrehen der Justierschrauben 34, 35 wesentlich erleichtert.

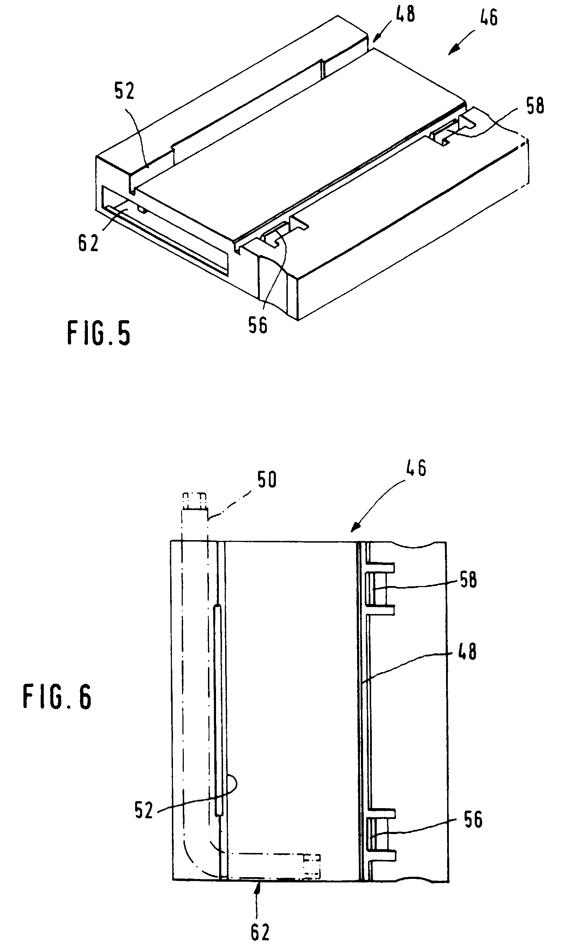

In Figur 5 ist eine räumliche Darstellung der Justierplatte 46 gezeigt, wobei die Federn 56, 58 und die Öffnung 62 zur Deponie des Schraubendrehers 50 deutlich von der anderen Seite sichtbar sind

In Figur 6 ist die Draufsicht auf eine Justierplatte 46 gezeigt, wobei die Anschlagfläche der Stufe 52, die Nut 48, die Federn 56, 58 und der zur Aufbewahrung eingesteckte Winkelschraubenzieher 50 erkennbar sind.

Bei einem nichtdargestellten Ausführungsbeispiel der Erfindung sind die Schraubenköpfe der Justierschrauben und die der Klemmschrauben mit einem einzigen Innen-Mehrkant-Steckschlüssel lösbar und spannbar. Dadurch kann mit dem einen an der Justierplatte deponierten Steckschlüssel sowohl das Hobelmesser an der Hobelwelle gespannt als auch das Hobelmesser mittels der Justierplatte eingestellt werden.

## Patentansprüche

1. Justierplatte mit Anschlägen (48, 52) zum Einstellen des Abstandsmaßes einer Schneide (16) eines Hobelmessers (14) gegenüber einem Bezugsbereich (29) eines am Hobelmesser (14) verstellbar angeordneten Justierkörpers (28), wobei die Schneide (16) und der Justierkörper (28) an den Anschlägen (48, 52) der Justierplatte zur Anlage bringbar sind, dadurch gekennzeichnet, daß einer der Anschläge durch eine Nut (48) gebildet wird, in die der Justierkörper (28) greifen kann.

2. Justierplatte nach Anspruch 1, dadurch gekennzeichnet, daß eine der Seitenwände (54, 60) der Nut (40) elastisch federnd ausgestaltet ist und als Klemmittel (56, 58) zum Festhalten des Justierkörpers (28), insbesondere des als Schenkel (29) ausgestalteten Bereichs, dient.

3. Justierplatte nach Anspruch 1 oder 2, dadurch gekennzeichnet, daß zum Festhalten des Justierkörpers (28) die hintere Seitenwand (54) der Nut (48) als in die Justierplatte integrierte Blattfeder ausgestaltet ist.

4. Justierplatte nach Anspruch 1, 2 oder 3, dadurch gekennzeichnet, daß an der Justierplatte (46) ein Aufbewahrungsraum (62) für einen Schraubendreher (50) vorgesehen ist.

## Claims

1. Adjusting plate having stops (48, 52) for setting the distance spacing of a cutting edge (16) of a planing knife (14) with respect to a reference region (29) of an adjusting body (28), which is arranged adjustably on the planing knife (14), the cutting edge (16) and the adjusting body (28) being able to be brought to bear against the stops (48, 52) of the adjusting plate, characterized in that one of the stops is formed by a groove (48) into which the adjusting body (28) can grip.

2. Adjusting plate according to Claim 1, characterized in that one of the side walls (54, 60) of the groove (48) is of elastically resilient design and serves as a clamping means (56, 58) for securing the adjusting body (28), in particular the region which is designed as a limb (29).

3. Adjusting plate according to Claim 1 or 2, characterized in that for securing the adjusting body (28) the rear side wall (54) of the groove (48) is designed as a leaf spring integrated into the adjusting plate.

4. Adjusting plate according to Claim 1, 2 or 3, characterized in that a storage space (62) for a screwdriver (50) is provided on the adjusting plate (46).

## Revendications

1. Plaque de réglage avec des butées (48, 52) servant à régler la dimension de l'écartement entre un tranchant (16) d'un couteau de rabot (14) et une zone de référence (29) d'un corps de réglage (28) disposé de façon réglable sur le couteaux du rabot (14), le tranchant (16) et le corps de réglage (28) pouvant être mis en appui sur les butées (48, 52) de la plaque de réglage,
caractérisée en ce que
l'une des butées est constituée par une rainure (48), dans laquelle peut venir en prise le corps de réglage (28).

2. Plaque de réglage selon la revendication 1,
caractérisée en ce que
l'une des parois latérales (54, 60) de la rainure (40) est configurée de façon à faire ressort et sert de moyen de serrage (56, 58) pour maintenir le corps de réglage (28), en particulier sa zone en forme d'aile(29).

3. Plaque de réglage selon la revendication 1 ou la revendication 2,
caractérisée en ce que
pour maintenir solidement le corps de réglage (28) la paroi latérale postérieure (54) de la rainure (48) est configurée sous la forme de la lamelle de ressort intégrée dans la plaque de réglage.

4. Plaque de réglage selon la revendication 1, 2 ou 3,
caractérisée en ce que
l'on prévoit sur la plaque de réglage (46) un volume de rangement (62) pour un tournevis (50).
